# FASCICULE DE BREVET EUROPEEN

(11) **EP 3 559 481 B1**
(45) Date de publication et mention de la délivrance du brevet: **09.02.2022**
(21) Numéro de dépôt: 17816972.8
(22) Date de dépôt: 04.12.2017
(51) Int. Cl.: F16B 5/02, F16B 37/00, B29C 45/00, B29C 33/44

(54) **PIÈCE DE VÉHICULE AUTOMOBILE COMPORTANT UN FÛT DE VISSAGE ORIENTABLE**
KRAFTFAHRZEUGTEIL MIT EINEM AUSRICHTBAREN GEWINDEROHR
MOTOR VEHICLE PART COMPRISING AN ORIENTABLE THREADED BARREL

(30) Priorité: 22.12.2016 FR 1663176
(43) Date de publication de la demande: 30.10.2019
(73) Titulaire: Compagnie Plastic Omnium, 69007 Lyon (FR)
(72) Inventeur: LOUOT, Thierry, 01200 Lancrans (FR); GOMEZ, Jean-François, 38230 Tignieu Jameyzieu (FR); DUPONNOIS, Philippe, 52200 Langres (FR)
(74) Mandataire: LLR
(86) Numéro de dépôt international: PCT/FR2017/053361
(87) Numéro de publication internationale: WO 2018/115618

(56) Documents cités:
- WO-A1-2005/049300
- DE-A1-102007 024 732
- FR-A1- 2 900 863
- JP-A- H0 989 165
- US-A- 5 743 630
- US-A1- 2006 154 023

## Description

La présente invention concerne le domaine technique des pièces de véhicules automobiles issues de moulage de matière plastique, et notamment des pièces sur lesquelles doivent être fixés des équipements, en particulier par vissage. Une telle pièce de véhicule est divulguée dans le document FR2900863 A1.

Pour fabriquer un véhicule automobile, il est nécessaire d'assembler des équipements sur des pièces issues de moulage de matière plastique. Il est parfois nécessaire d'assembler un tel équipement sur une telle pièce de façon à ce que la direction de démoulage de la pièce et la direction normale au plan de contact de l'équipement ne soient pas parallèle.

Par exemple, un tel assemblage est mis en œuvre pour la fixation d'un boîtier optique dans un logement d'une face avant de véhicule automobile et aussi pour la fixation d'un lave-projecteur, d'un radar, d'un capteur ou tout autre équipement rapporté sur une pièce de carrosserie, peau de pare-chocs, doublure.

Un boîtier optique est un boitier adapté à recevoir un ensemble fonctionnel, tels que des moyens électriques, des moyens électroniques et des moyens optiques, permettant de remplir la fonction d'éclairage d'un véhicule. Un tel boîtier optique est fermé par un vitrage transparent afin de constituer un bloc optique étanche.

Un tel boîtier optique est assemblé dans un logement d'une pièce de véhicule automobile (parechoc, ouvrant arrière, aile) prévu à cet effet, par l'intermédiaire de points de fixation, et par la mise en place de joint d'étanchéité entre le fond du boîtier optique (à l'opposé du vitrage) et la pièce (doublure ou peau dans le cas d'un hayon).Le logement comporte des fûts de fixation ayant une orientation donnée. Les boîtiers optiques, réalisés en matière plastique, comportent des surfaces de contact qui ne sont pas adaptées à chaque véhicule car ces boîtiers ont des designs standards produits en grande quantité. Le logement de la pièce du véhicule peut facilement présenter une paroi dont l'orientation est adaptée à cette surface de contact. Par contre, il est plus compliqué d'obtenir un trou avec la bonne orientation dans cette paroi car, de façon classique, les trous ont des axes qui correspondent à la direction de démoulage de la pièce. C'est pourquoi, lors de l'assemblage du boîtier optique dans le logement, les fûts ne sont pas orientés selon une même direction : la normale à la surface de contact entre le boîtier et la pièce de véhicule est différente de la direction du fût du logement.

Pour s'affranchir de ce problème, il est connu d'utiliser des cales mobiles dans le moule pour le fût de fixation, afin de fournir des mouvements permettant de s'affranchir de la direction de démoulage : il est possible de donner au fût une orientation différente que celle de la direction de démoulage.

Cependant une telle solution est complexe et couteuse.

Pour s'affranchir de ce problème, il est également connu d'utiliser des pièces rapportées comportant un fût. Le montage de ces fûts rapportés se fait par clipsage. Cet élément d'assemblage peut compenser certaines tolérances dans la configuration d'assemblage/démoulage. Ces fûts rapportés clippés sont bien adaptés pour le vissage direct sur matières plastique.

Une telle solution nécessite donc l'achat et l'assemblage de pièces supplémentaires, donc coût et un temps d'assemblage augmenté.

L'invention a pour but de remédier à ces inconvénients en fournissant une pièce de véhicule automobile comprenant un fût orienté dans la direction de démoulage, mais orientable selon une direction différente.

Ainsi, l'objet de l'invention concerne une pièce de véhicule automobile selon la revendication 1.

Cette invention permet d'éviter l'utilisation de pièces supplémentaires pour l'assemblage de la pièce avec l'équipement, telle qu'un clip à fût.

De fait, l'invention permet donc un gain de temps pour l'assemblage de la pièce avec l'équipement, et un gain de coût de la pièce.

Selon l'invention, l'équipement est un boîtier optique et la pièce est un logement pour bloc optique d'un hayon ou d'une face avant de véhicule automobile.

La pièce peut en outre comporter l'une ou plusieurs des caractéristiques suivantes, prises seules ou en combinaison
- la pièce comporte un moyen d'orientation de l'axe du fût de fixation afin que le fût de fixation soit orientable ;
- le moyen d'orientation forme une liaison pivot, autour d'un axe de pivotement, entre le fût et le reste de la pièce ;
- l'axe de pivotement est perpendiculaire à un plan dans lequel peut être orienté l'axe ;
- le moyen d'orientation est un élément charnière ;
- l'élément charnière est formé par un amincissement d'une paroi liant le fût de fixation au reste de la pièce ;
- le fût de fixation est un fût de vissage ;
- la direction de démoulage de la pièce est différente d'une direction de vissage du fût de vissage ;
- la pièce est en matière polymère, notamment en polymère thermoplastique ou thermodurcissable.

L'invention sera mieux comprise à la lecture des figures annexées, qui sont fournies à titre d'exemples et ne présentent aucun caractère limitatif, dans lesquelles :

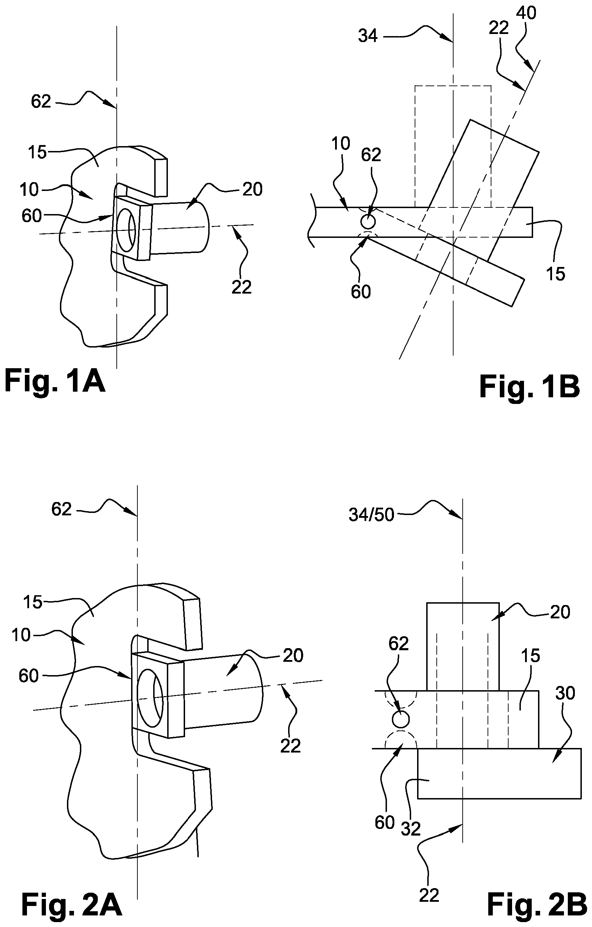

- les figures 1A et 1B illustrent de façon schématique une pièce de véhicule automobile selon l'invention lorsque l'axe du fût est orienté selon la direction de démoulage de la pièce: la figure 1A illustre la pièce en trois dimensions ; la figure 1B est une vue de dessus, dans un plan parallèle au plan d'orientation de l'axe du fût ;
- les figures 2A et 2B illustrent de façon schématique la pièce de véhicule automobile des figures 1A et 1B lorsque l'axe du fût a été réorienté selon une direction différente de la direction de démoulage de la pièce : la figure 2A illustre la pièce en trois dimensions ; la figure 2B est une vue de dessus, dans un plan parallèle au plan d'orientation de l'axe du fût ;

On se réfère maintenant aux figures 1A et 1B qui illustrent de façon schématique une partie d'une pièce 10 de véhicule automobile selon l'invention. La figure 1A illustre la pièce 10 en trois dimensions. La figure 1B est une vue de dessus. Cette pièce 10 est issue de moulage de matière plastique. Par exemple la pièce peut provenir d'un procédé de moulage par compression, par injection, ou par tout autre moyen de moulage. La matière plastique peut être une matière polymère, notamment en polymère thermoplastique ou thermodurcissable.

L'opération de moulage se termine par une opération de démoulage, qui consiste à retirer du moule la pièce ainsi moulée, selon une direction donnée. Cette direction est appelée « direction de démoulage » par les spécialistes. La direction de démoulage de la pièce 10 est notée 40 sur les figures.

La pièce 10 comporte un fût de fixation 20. On appelle fût de fixation, un élément formant un conteneur de section circulaire.

En position non assemblée sur un équipement, l'axe 22 du fût de fixation 20 est orienté selon la direction de démoulage 40 de la pièce 10, comme l'illustre les figures 1A et 1B (l'axe 22 et la direction 40 sont confondus).

Le fût de fixation 20 permet de fixer un équipement 30 sur la pièce 10. L'équipement 30 possède un élément 32 devant coopérer avec le fût 20 (figure 2B). L'élément 32 comporte également un axe 34 (figures 1B et 2B).

Afin de pouvoir être assemblé un équipement 30 sur la pièce 10 dont l'axe 34 de l'équipement 30 n'est pas aligné avec la direction de démoulage 40 de la pièce 10, le fût de fixation 20 est orientable.

Le fût de fixation 20 est orientable en ce que son axe 22 peut être orienté dans une direction différente 50 de la direction de démoulage 40 de la pièce, comme illustré sur la figure 2B.

L'axe du fût 20 est orientable, grâce à un moyen d'orientation 60 de l'axe 22 du fût 20.

Selon un mode de réalisation, le moyen d'orientation 60 forme une liaison pivot, autour d'un axe de pivotement 62, entre le fût 20 et le reste 15 de la pièce 10. Le moyen d'orientation 60 peut ainsi être un élément charnière, permettant à l'ensemble du fût 20 de pivoter autour de l'axe de pivotement 62.

Comme l'illustre la figure 2B, l'axe 62 est de préférence perpendiculaire au plan dans lequel on souhaite orienter l'axe 22.

Selon un mode de réalisation, illustré sur la figure 2B, l'élément charnière (60) est formé par un amincissement de la paroi liant le fût de fixation 20 au reste de la pièce 10. Cet amincissement forme ou contient l'axe de pivotement 62.

Selon un mode de réalisation préféré, le fût de fixation 20 est un fût de vissage, dans lequel une vis (vis ou système de fixation non représentée sur la figure 2B) peut être vissée. La direction de démoulage 40 de la pièce 10 est différente de la direction de vissage du fût 20 de vissage sur l'équipement 30.

**Liste des références**
- 10 :: pièce de véhicule automobile issue de moulage de matière plastique
- 15 :: partie de la pièce 10 autre que le fût 20
- 20 :: fût de fixation
- 22 :: axe du fût 20
- 30 :: équipement destiné à être fixé sur la pièce 10.
- 32 :: élément de l'équipement 30 devant coopérer avec le fût de fixation pour assembler la pièce 10 et l'équipement 30
- 34 :: direction de vissage, i. e. direction normale à la surface de la pièce 10 qui va être en contact localement avec l'élément 32 de l'équipement 30
- 40 :: direction de démoulage de la pièce 10
- 50 :: direction différente de la direction de démoulage 40, par exemple la direction de vissage
- 60 :: moyen d'orientation du fût de fixation 20
- 62 :: axe de pivotement du fût 20 par rapport à la partie 15 de la pièce 10

## Revendications

1. Pièce (10) de véhicule automobile issue de moulage de matière plastique, comportant un fût (20) de fixation à un équipement dans laquelle l'équipement (30) est un boîtier optique et la pièce (10) est un logement pour bloc optique d'un hayon ou d'une face avant de véhicule automobile, **caractérisée en ce que** le fût (20) de fixation a un axe (22) orienté selon la direction de démoulage (40) de la pièce (10), et le fût (20) de fixation est orientable de façon à orienter son axe dans une direction différente (50) de la direction de démoulage (40) de la pièce.

2. Pièce (10) selon la revendication précédente, comportant un moyen d'orientation (60) de l'axe (22) du fût (20) de fixation afin que le fût (20) de fixation soit orientable.

3. Pièce 10 selon la revendication précédente, dans laquelle le moyen d'orientation (60) forme une liaison pivot, autour d'un axe de pivotement (62), entre le fût (20) et le reste (15) de la pièce (10).

4. Pièce (10) selon la revendication précédente, dans laquelle l'axe de pivotement (62) est perpendiculaire à un plan dans lequel peut être orienté l'axe (22).

5. Pièce (10) selon l'une des revendications 3 et 4, dans laquelle le moyen d'orientation (60) est un élément charnière.

6. Pièce (10) selon la revendication précédente, dans laquelle l'élément charnière est formé par un amincissement d'une paroi liant le fût (20) de fixation au reste de la pièce (10).

7. Pièce (10) selon l'une des revendications précédentes, dans laquelle le fût (20) de fixation est un fût de vissage.

8. Pièce (10) selon la revendication précédente, dans laquelle la direction de démoulage (40) de la pièce (10) est différente d'une direction de vissage du fût (20) de vissage.

9. Pièce (10) selon l'une des revendications précédentes, réalisée en matière polymère, notamment en polymère thermoplastique ou thermodurcissable.

## Patentansprüche

1. Teil (10) eines Kraftfahrzeugs, das durch Formen von Kunststoffmaterial hergestellt wird, mit einem Schaft (20) zur Befestigung an einer Ausrüstung, wobei die Ausrüstung (30) ein optisches Gehäuse ist und das Teil (10) eine Aufnahme für eine optische Einheit einer Heckklappe oder einer Vorderseite eines Kraftfahrzeugs ist, **dadurch gekennzeichnet, dass** der Befestigungsschaft (20) eine Achse (22) aufweist, die entlang der Entformungsrichtung (40) des Teils (10) ausgerichtet ist, und der Befestigungsschaft (20) so ausrichtbar ist, dass er seine Achse in eine andere Richtung (50) als die Entformungsrichtung (40) des Teils ausrichtet.

2. Teil (10) nach dem vorhergehenden Anspruch, mit einem Mittel (60) zum Ausrichten der Achse (22) des Befestigungsschaftes (20), so dass der Befestigungsschaft (20) ausrichtbar ist.

3. Teil 10 nach dem vorhergehenden Anspruch, wobei das Ausrichtungsmittel (60) eine Schwenkverbindung um eine Schwenkachse (62) zwischen dem Schaft (20) und dem Rest (15) des Teils (10) bildet.

4. Teil (10) nach dem vorhergehenden Anspruch, bei dem die Schwenkachse (62) senkrecht zu einer Ebene steht, in der die Achse (22) ausgerichtet werden kann.

5. Teil (10) nach einem der Ansprüche 3 oder 4, wobei das Ausrichtungsmittel (60) ein Scharnierelement ist.

6. Teil (10) nach dem vorhergehenden Anspruch, bei dem das Scharnierelement durch eine Verdünnung einer Wand gebildet wird, die den Befestigungsschaft (20) mit dem Rest des Teils (10) verbindet.

7. Teil (10) nach einem der vorhergehenden Ansprüche, wobei der Befestigungsschaft (20) ein Schraubschaft ist.

8. Teil (10) nach dem vorhergehenden Anspruch, wobei die Entformungsrichtung (40) des Teils (10) von einer Einschraubrichtung des Schraubschafts (20) verschieden ist.

9. Teil (10) nach einem der vorhergehenden Ansprüche, hergestellt aus polymerem Material, insbesondere aus thermoplastischem oder duroplastischem Polymer.

## Claims

1. Part (10) of a motor vehicle from plastic molding, comprising an attachment barrel (20) to an equipment in which the equipment (30) is an optical block and the part (10) is a housing for optical block to a tailgate or front face of a motor vehicle, **characterized in that** the attachment barrel (20) has an axis (22) oriented according to the part (10) release direction (40), and the attachment barrel (20) is steerable so as to orient its axis in a direction different (50) from the part (10) release direction (40).

2. Part (10) according to the preceding claim, comprising an orientation mean (60) of the attachment barrel (20) so that the attachment barrel (20) is steerable.

3. Part (10) according to the preceding claim, wherein the orientation mean (60) forms a pivot bond, around a pivoting axis (62), between the barrel (20) and the rest (15) of the part (10).

4. Part (10) according to the preceding claim, wherein the pivoting axis (62) is perpendicular to a plane in which the axis (22) can be oriented.

5. Part (10) according to any of claims 3 and 4, wherein the orientation mean (60) is a hinge element.

6. Part (10) according to the preceding claim, wherein the hinge element is formed by a thinning of a wall binding the attachment barrel (20) to the rest of the part (10).

7. Part (10) according to any of the preceding claims, wherein the attachment barrel (20) is a screwing barrel.

8. Part (10) according to the preceding claim, wherein the part (10) release direction (40) is different from a screwing direction of the screwing barrel.

9. Part (10) according to any of the preceding claims, made of polymer material, in particular thermoplastic or thermosetting polymer.
